# EUROPEAN PATENT SPECIFICATION

(11) **EP 4 697 186 B1**
(45) Date of publication and mention of the grant of the patent: **09.12.2026**
(21) Application number: 25226758.8
(22) Date of filing: 10.05.2024
(51) Int. Cl.: G06F 13/28, G06F 13/16, G06F 13/368

(54) **PERFORMANCE BOOSTERS FOR MULTICORE PROCESSORS IN HARD-REAL-TIME SAFETY-CRITICAL AVIONICS APPLICATIONS**
LEISTUNGSVERSTÄRKER FÜR MEHRKERNPROZESSOREN IN SICHERHEITSKRITISCHEN ECHTZEIT-AVIONIKANWENDUNGEN
AMPLIFICATEURS DE PERFORMANCE POUR PROCESSEURS MULTICOEURS DANS DES APPLICATIONS AVIONIQUES CRITIQUES EN TERMES DE SÉCURITÉ EN TEMPS RÉEL

(30) Priority: 10.05.2023 EP 23172596; 04.04.2024 IT 202400007477; 04.04.2024 IT 202400007480; 04.04.2024 IT 202400007483; 04.04.2024 IT 202400007504; 04.04.2024 IT 202400007507
(43) Date of publication of application: 18.02.2026
(62) Document number(s) of the earlier application(s) in accordance with Art. 76 EPC: 24727511.8 / 4 623 364
(73) Proprietor: Leonardo S.p.A., 00195 Roma (IT)
(72) Inventor: SOZZI, Marco, 20014 NERVIANO (MI) (IT); TRAVERSONE, Massimo, 20014 NERVIANO (MI) (IT); PONZELLETTI, Alberto, 20014 NERVIANO (MI) (IT); BARRETTA, Domenico, 20014 NERVIANO (MI) (IT); TEODORI, Roberto, 20014 NERVIANO (MI) (IT); SCAFFEO, Silvia, 20014 NERVIANO (MI) (IT); LAZZERINI, Claudio, 20014 NERVIANO (MI) (IT); SCOSCINI, Stefano, 20014 NERVIANO (MI) (IT)
(74) Representative: Studio Torta S.p.A.

(56) References cited:
- SAIDI SELMA ET AL: "The shift to multicores in real-time and safety-critical systems", 2015 INTERNATIONAL CONFERENCE ON HARDWARE/SOFTWARE CODESIGN AND SYSTEM SYNTHESIS (CODES+ISSS), IEEE, 4 October 2015 (2015-10-04), pages 220 - 229, XP032813495, DOI: 10.1109/CODESISSS.2015.7331385
- TABISH ROHAN ET AL: "A real-time scratchpad-centric OS with predictable inter/intra-core communication for multi-core embedded systems", REAL TIME SYSTEMS, KLUWER ACADEMIC PUBLISHERS, DORDRECHT, NL, vol. 55, no. 4, 5 September 2019 (2019-09-05), pages 850 - 888, XP036907992, ISSN: 0922-6443, [retrieved on 20190905], DOI: 10.1007/S11241-019-09340-0
- HICHAM AGROU ET AL: "Mastering the behavior of multi-core systems to match avionics requirements", DIGITAL AVIONICS SYSTEMS CONFERENCE (DASC), 2012 IEEE/AIAA 31ST, IEEE, 14 October 2012 (2012-10-14), pages 6E5 - 1, XP032279769, ISBN: 978-1-4673-1699-6, DOI: 10.1109/DASC.2012.6382403
- TREVOR MARTIN: "The Insider's Guide to the STM32 ARM Based Microcontroller", 28 February 2009 (2009-02-28), pages 1 - 103, XP055017059, Retrieved from the Internet <URL:http://www.gaw.ru/pdf/The_Insiders_Guide_to_the_STM32_ARM-based_Microcontroller_Hitex.pdf> [retrieved on 20120120]

## Description

### CROSS-REFERENCE TO RELATED APPLICATIONS

This Patent Application claims priority to European Patent Application No. 23172596.1 filed on May 5, 2023, and Italian Patent Applications Nos. 102024000007477, 102024000007480, 102024000007483, 102024000007504 and 102024000007507, all filed on April 4, 2024.

### TECHNICAL FIELD OF THE INVENTION

The present invention relates in general to avionics systems, namely electronic systems used in aeronautics and astronautics on aircrafts, artificial satellites, and spacecrafts.

In particular, the present invention relates to a certifiable true-deterministic system software framework for hard-real-time, safety-critical avionics application software in avionics systems featuring multicore processors.

More in particular, the present invention relates to improvements in or relating to performance (also known as performance boosters) of multicore processors implementing hard-real-time, safety-critical avionics application software.

### BACKGROUND OF THE INVENTION

As is known, avionics (from aviation and electronic) systems represent a growing part of aircraft costs, and are responsible for various software applications, such as navigation, guidance, stability, fuel management, air/ground communications, passenger entertainment, flight control, flight management, etc. Avionics systems have become central components of aircrafts, and have to ensure a large variety of requirements, such as safety, robustness to equipment failures, determinism, and real-time.

In response to these requirements, and in particular the need in aerospace industry for increased processing power, communication bandwidth and hosting multiple federated software applications into a single integrated platform, aircraft manufacturers have proposed different avionics system architectures, including the Federated Architecture, which was based on dedicated computational modules or processing units around the aircraft and each hosting a single software application specifically for certain function, and the more recent Integrated Modular Architecture (IMA), which superseded the Federated Architecture to meet the need for increased processing power, communication bandwidth and multiple federated software applications hosted into a single integrated platform.

The central idea of IMA is multiple software applications sharing the same resources, like processing units with real-time operating systems, communication buses, local area networks with real-time communication protocols, etc. IMA has also contributed to the development of the so-called x-by-wire distributed application software, namely safety-related avionics application software, such as steering, braking, flight control, that depend on a real-time communication network to connect different electronic components.

Among the constraints avionics systems must meet, the real-time constraints play a paramount role and have direct impact on architecture design at aircraft and system level, and on the validation/certification process. Aircraft manufacturers have hence to show compliance with international regulations using means that have been accepted by the certification authorities. This includes showing that safety requirements are enforced, establishing the predictability of communication, computing real-time performances, and developing software and hardware according to strict development guidelines.

In parallel, information and communication technologies, as well as processor manufacturing technologies, are evolving, and new solutions for avionics are being proposed. In the last years all commercial domains, including avionics, have experienced the progressive disappearance of mono-core processors and the progressive emergence of multi-core processors, i.e. chips integrating several cores.

They feature high integration and a good performance-per-watt ratio thanks to resource sharing between cores. Therefore, they offer promising opportunities due to their high level of computing power. It is expected that suitably controlled multi-core systems will provide an appropriate increase in computation power needed by complex application software, such as complex flight control systems, needing short response times and huge computations. Standard multi-core processors averagely include 2 to 8 on-chip cores, but this number is progressively increasing to16, 32, 64.

Cores usually have one or two levels of private instruction and data caches known as L1 and L2 and share an additional level known as L3, as well as a common bus to the main memory. Such architectures often implement hardware cache coherency schemes that allow running parallel software applications designed under the very convenient shared memory programming model. However, embedding multi-core processors in avionics systems is a challenge. In fact, multi-core processors involve intensive resource sharing and several non-predictable mechanisms for managing resource sharing, which make it hard to ensure time predictability.

Resource sharing makes timing analysis of safety-critical systems very complex or even unfeasible. This is due to the difficulty of taking all the possible inter-task conflicts into account, in particular when the cache coherency controller generates implicit communications.

In particular, the challenges that avionics safety-critical system designers are required to meet are determining the worst-case execution time (WCET), the worst-case communication time, and the worst-case memory access time for any task in order to verify that the hard real-time requirements are always met.

Several approaches have been proposed to improve the worst-case analysis.

A first approach is designing specific predictable multi-core processor architectures, where deterministic behavior of safety-critical application software is guaranteed by causing the safety-critical application software to be executed on one core only, while the others cores are not used.

A second approach is a time-oriented approach, according to which an execution model is applied, where rules that constrain the behavior of the safety-critical application software within associated timing slots and reduce the number of non-predictable behaviors are defined.

In addition to the foregoing, aviation certification authorities such as the U.S. Federal Aviation Administration (FAA) and the European Aviation Safety Agency (EASA) are concerned about the use of multicore processors in safety-critical avionics systems (Design Assurance Level (DAL) A, B or C) due to potential non-deterministic architectures of multi-core processors and the overall complexity of the systems embedding these processors.

For all these reasons, exploitation of multi-core processors in avionics systems intended to implement hard real-time safety-critical avionics application software is presently a difficult task for avionics system designers, and worst-case predictability is one of the major concerns, because mitigation of the risk could be very heavy from different points of view, especially time and cost.

The state-of-the-art approaches are essentially based on either a core-constrictive paradigm, according to which only a single core in the multi-core processor is allowed to operate, or a time-constrictive paradigm, according to which the cores in the multi-core processor are prevented to operate simultaneously but allowed to operate in associated time slots, so resulting in a computational resource waste.

US 2012/0084525 A1 discloses a method and a device for loading and executing instructions with deterministic cycles in a multicore avionics system having a bus of which the access time is not predictable. The avionics system includes a multi-core processor including at least two cores, and a memory controller, each of the cores including a private memory. The plurality of instructions is loaded and executed by execution slots such that, during a first execution slot, a first core has access to the memory controller for transmitting at least one piece of data stored in the private memory thereof and for receiving and storing at least one datum and an instruction from the plurality of instructions in the private memory thereof, while the second core does not have access to the memory controller and executes at least one instruction previously stored in the private memory thereof and such that, during a second execution slot, the roles of the two cores are reversed.

US 8,943,287 B1 discloses a multi-core processor system configured to constrain access rate from memory. The multi-core processor system includes a number of cores, a memory system, and a common access bus that interconnects the cores and the memory system. Each core includes a core processor, a dedicated core cache operatively connected to the core processor, and a core processor rate limiter operatively connected to the dedicated core cache. The memory system includes physical memory, preferably a double data rate (DDR) memory and more specifically DDR SDRAM memory, a memory controller connected to the physical memory, and a dedicated memory cache connected to the memory controller. The core processor rate limiters are configured to constrain the rate at which data is accessed by each respective core processor from the memory system so that each core processor memory access is capable of being limited to an expected value. As a result of rate limiting, the multi-core processor system provides for asynchronous operation between the core processors while the DDR bandwidth required to meet processing deadlines is guaranteed.

The Applicant has appreciated that the approach disclosed in US 8,943,287 B1, which results in an asynchronous operation of the cores in the multi-core processor, is aimed at obviating deficiencies of the state-of-the-art approaches considered in US 8,943,287 B1 and resulting from the relatively high number of constraints to be imposed to the operation of the multi-core processor systems in avionics systems in order to meet the safety requirements, wherein in US 8,943,287 B1 the deficiencies are identified in the inefficient or low efficient utilization of the multi-core processors in avionics systems, that worsen as the number of cores per processor increases, and in the relatively complex design approach when undesired dead times result in the necessity to synchronize the cores in the multi-core processors.

In order to improve exploitation of computational resources of multi-core processors embedded in avionics systems intended to implement hard real-time safety-critical avionics application software, without adversely affecting the true-deterministic behavior thereof, EP 3 338 196 B1 and US 10,642,761 B2 granted to the present Applicant disclose an avionics system comprising a central processing unit programmed to implement one or more hard real-time safety-critical application software and comprising a multicore processor with a plurality of cores, a memory, a common bus though which the multicore processor can access the memory and an avionics system software executable by the multicore processor to cause, when executed, the cores in the multicore processor to access the memory through the common bus by sharing bus bandwidth according to assigned bus bandwidth shares.

In particular, the avionics system software is designed to cause, when executed, actual bus bandwidth usages by the cores in the multicore processor to be scheduled to be periodically checked against the assigned bus bandwidth shares to determine those cores in the multicore processor that have eventually overrun the assigned bus bandwidth shares, and the cores that are determined to have overrun the assigned bus bandwidth shares to be scheduled to be idled to compensate for the overruns. The avionics system software is further designed to cause, when executed, actual bus bandwidth usages by the cores in the multicore processor to be scheduled to be checked against the assigned bus bandwidth shares synchronously among the cores, to result in the actual bus bandwidth usages by the cores in the multicore processor being checked simultaneously.

While multicore processors are the best trade-off between the silicon area, used to create the chip, and the overall performance and allow the computing power to be increased without increasing the clock frequency and, hence, without changing the chip technology, on the other side of these benefits, the Applicant has experienced that there are intrinsic interferences among different software applications on different cores due to shared resources contention, starting from the DDR memory. Therefore, a simple concurrent execution of software applications on different cores results in the execution time of each software application being influenced by the behavior of the software applications on other cores. While this problem is negligible in general use software applications, it becomes highly relevant in full deterministic software applications. In hard-real-time software applications, the deadline of the software application and, hence, performance thereof is related to the WCET (typically gained by sum of single task WCET of the sequence), which is not a simple average of execution time like in the general-purpose software applications.

Performance of avionic hard-real-time application software is related to the WCET that means the allocation of a time window (deadline associated to the software application) equal to or greater than the sum of the WCETs of the software applications included into the time window. WCET is the absolute worst case execution time that is very different from the average execution time. This means to waste CPU time into time window margin to fit the WCET.

The aim of the present invention is to provide performance boosters for multicore processors in hard-real-time safety-critical avionics applications to reduce latency resulting from interferences among different software applications due to shared resources contention, to result in a significative reduction of the WCET jitter, thus allowing the associated time window to be reduced and spare time to be increased for introducing other functions and applications.

Trevor Martin's "The Insider's Guide to the STM32 ARM Based Microcontroller", 28 February 2009 (2009-02-28), pages 1-103, Retrieved from the Internet:URL:http://www.gaw.ru/pdf/ The_Insiders_Guide_to_the_STM32_ARM-based_Microcontroller_Hitex.pdf, discloses a DMA Controller managing many I/O accesses to peripherals.

### SUBJECT AND SUMMARY OF THE INVENTION

The present invention relates to an avionics system as claimed in the appended claims.

### BRIEF DESCRIPTION OF THE DRAWINGS

Figure 1 schematically depicts a block diagram of a multicore electronic central processing unit in a hard-real-time, safety-critical avionics system.
Figures 2a and 2b schematically depict different cache architectures in cores of a multicore processor.
Figure 3 schematically depicts memory caching and memory banking.
Figure 4 schematically depicts ARINC 653 inter-partition communication ports.
Figure 5 schematically depicts typical implementations of ARINC 653 sampling and queuing ports.
Figure 6 schematically depicts memory banking in a multicore processor.
Figure 7 schematically depicts memory buffer allocations according to the state of the art, with possible cache line overflow on different memory buffers.
Figure 8 schematically depicts memory buffer allocations according to the invention, with alignment padding.
Figure 9 schematically depicts implementation of an ARINC 653 sampling port according to the invention.
Figures 10 and 11 schematically depict the way in which a data-producer software application and two data-consumer software applications concurrently access an ARINC 653 sampling port in reading and writing modes.

### DETAILED DESCRIPTION OF EMBODIMENTS OF THE INVENTION

Unless otherwise defined, all the technical and scientific terms used herein have the same meaning commonly used by people of ordinary skill in the field pertaining to the present invention. In case of conflict, the present description, including the definitions provided, will be binding.

In particular, the block diagrams in the accompanying figures and described below are not to be understood as a representation of the structural features, i.e. construction limitations, but are to be interpreted as a representation of functional features, i.e. intrinsic properties of the devices and defined by the effects obtained, i.e. functional limitations, and which can be implemented in different ways, therefore so as to protect the functionalities thereof (possibility to operate).

To facilitate the understanding of the embodiments described herein, reference will be made to some specific embodiments, and a specific lexicon will be used to describe them.

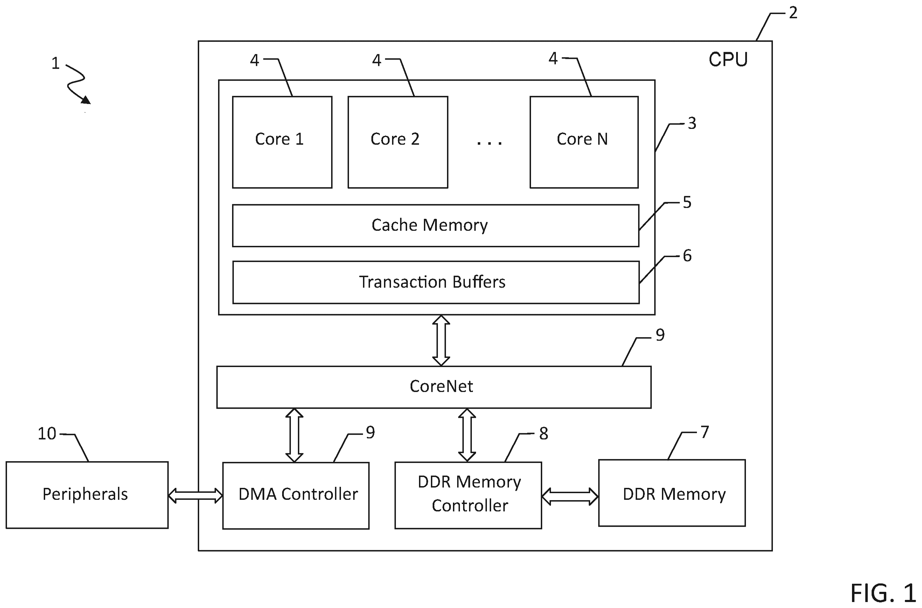

Figure 1 schematically depicts a block diagram of an avionics system **1** comprising electronic processing resources, in the embodiment considered in the form of an electronic central processing unit hereinafter referred to as CPU **2** for the sake of brevity, programmed to implement an avionics system software and hard-real-time safety-critical avionics application software, such as such as flight control, flight management, navigation, guidance, stability, fuel management, air/ground communications, etc.

The CPU **2** may have any one of the known CPU architectures, in *e.g.,* an ARM (Advanced or Acorn RISC (Reduced Instruction Set Computer) Machine) architecture, a PowerPC (Performance Optimization With Enhanced RISC - Performance Computing) architecture or an Intel architecture.

The CPU **2** comprises a multicore processor **3** with a plurality of cores **4,** on each of which one or a set of software applications are stored ad executed, a cache memory **5** and transaction buffers **6;** a main or system memory 7, conveniently a DDR SDRAM (Double Data Rate Synchronous Dynamic Random Access Memory), for this reason hereinafter referred to as DDR memory **7,** accessible via an associated DDR memory controller **8;** and a system bus **9** through which the multicore processor **3** accesses, through the transaction buffers **6,** the system memory **7** and peripherals **10,** via a Direct Memory Access (DMA) Controller **11.**

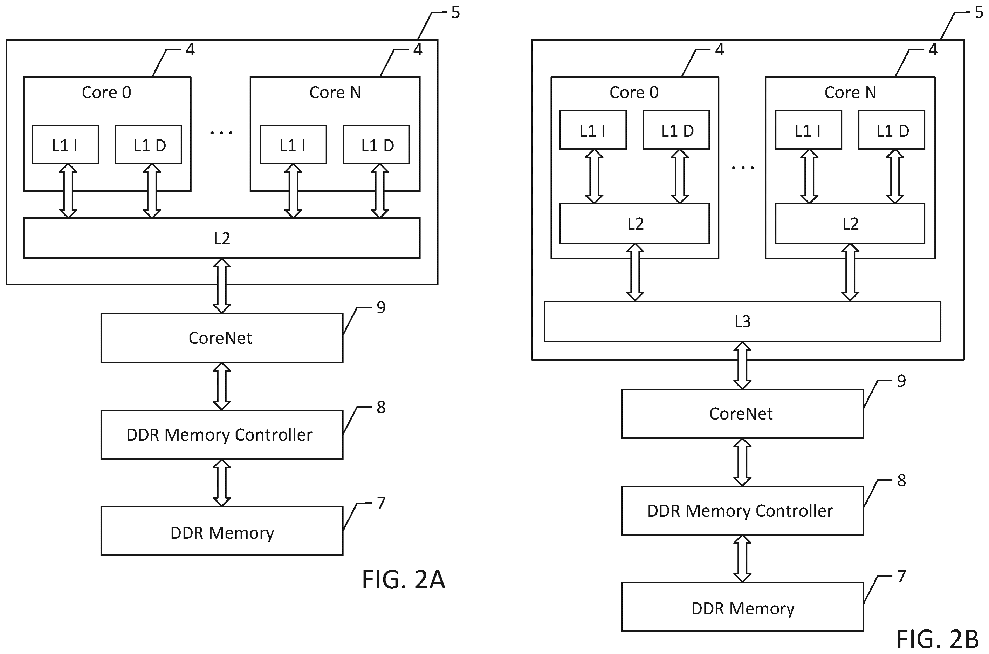

Cache memory **5** may have any one of the known cache architectures, *e*.*g*., either a two-level cache architecture shown in Figure 2a, where one level of private caches, known as L1 caches, are assigned to the cores **4** of the multicore processor **3,** and one level of public or shared cache, known as L2 cache, is shared between the cores **4** of the multicore processor **3,** or a tri-level cache architecture shown in Figure 2b, where two levels of private caches, known as L1 and L2 caches, are assigned to the cores **4** of the multicore processor **3,** and one level of public cache, known as L3 cache, is shared between the cores **4** of the multicore processor **3.** To further optimize data access, L1 caches may conveniently be divided into L1d caches for data and L1i caches for instructions.

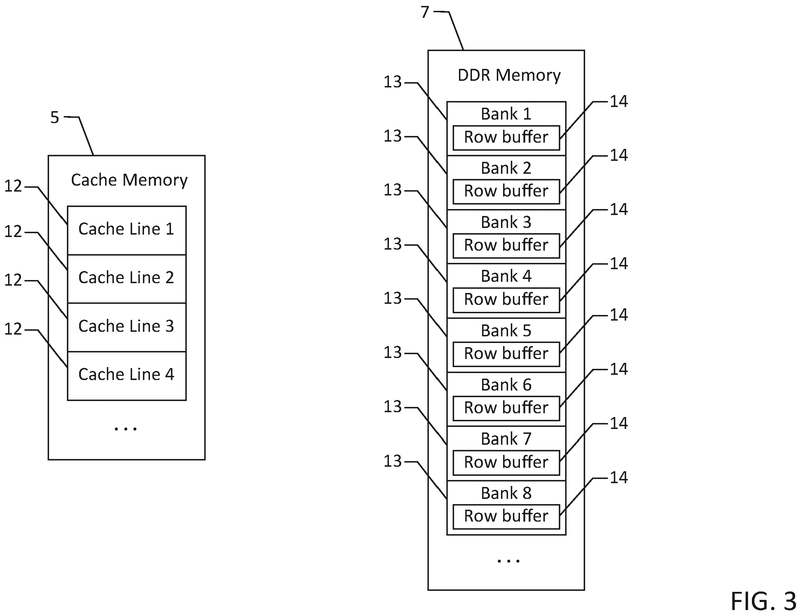

As shown in Figure 3, cache memory **5** is divided or organized in separate, logical basic storage units known as cache lines or blocks **2** of a fixed size, e.g., ranging from 32 to 256 KB, in which data is transferred between the DDR memory **7** and the cache memory **5.**

Similarly, DDR memory **7** is divided or organized in separate, logical storage units or sections known as memory banks **13,** each of which can be accessed independently and has a hardware-dependent size, *e.g.,* 256 Mbytes, and is provided with an associated row buffer **14** which acts as a cache within the memory bank **13** and is different from the row buffers **14** of the other memory banks **13.**

When a cache line is copied from the DDR memory **7** to the cache memory **5,** a cache entry is created, including the copied data as well as the requested memory location called a tag. When the multicore processor **3** needs to read or write a location in the DDR memory **7,** the cache memory **5** is first checked. If a cache entry can be found with a tag matching that of the desired data, a cache hit occurs, otherwise a cache miss occurs. If a cache hit occurs, the multicore processor **3** reads or writes the data in the cache line, otherwise a new cache entry is created in the cache memory **5** and the requested data is copied from the DDR memory **7** in the cache memory **5** and the request is fulfilled from the contents of the cache memory **5.**

System bus **9** is conveniently a high-speed CoreNet fabric, which is a next-generation front-side interconnect architecture standard for multicore processors suitable for scalable on-chip network to connect multiple Power Architecture processing cores with caches, stand-alone caches and memory subsystems and was designed to provide a coherent multicore migration solution enabling the move to multicore.

Avionics application software is designed according to an avionics application software standard interface known as ARINC (abbreviation for Aeronautical Radio Incorporated) 653, which is an aerospace standard that defines characteristics of data transference inside aerospace avionic devices and provides for a software specification for space and time partitioning in safety-critical avionics real-time operating systems (RTOS) which allows multiple software applications of different software levels to be hosted on the same hardware in the context of an IMA architecture. Each application software is a partition and has its own memory space, and within each partition, multitasking is allowed.

In the context of IMA, each module may host different software applications and is isolated from other modules by robust partitioning mechanisms, which include spatial and temporal partitioning.

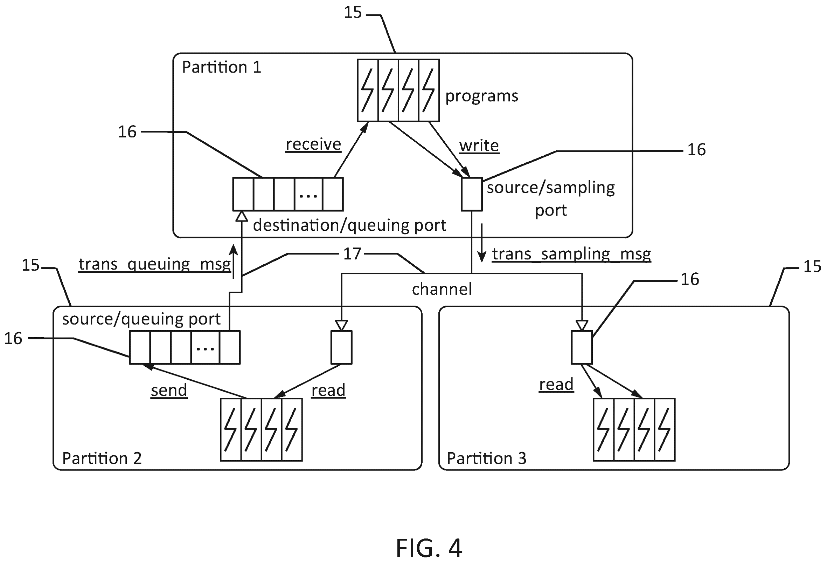

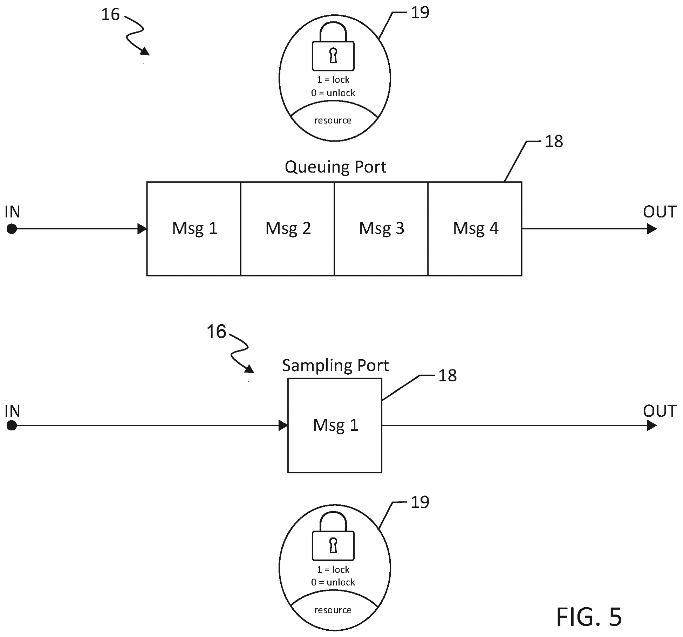

As shown in Figures 4 and 5, communications between partitions **15** are handled through communications ports **16** and channels **17.** Communications ports **16** are gates at the boundaries of the relevant partitions **15** and communications channels **17** mutually connect communications ports **16.**

Communications ports **16** are selectively operable in sampling and queuing modes and for this reason they are generally referred to as sampling and queuing ports, respectively. Sampling mode is used for periodic data transfers, like altitude data sent by a navigation-related partition, while queuing mode is used for aperiodic data transfer, like button pushes.

Communication among software applications hosted in partition **15** is accomplished through port buffers, while synchronization among software applications hosted in partition **15** is accomplished through events and semaphores.

Figure 5 shows typical implementations of queuing and sampling ports **16.** As shown, a typical implementation of a queuing port **16** requires multiple port buffers **18** with associated multiple port semaphores **19,** one for each port buffer **18,** while a typical implementation of a sampling port **16** requires a single port buffer **18** with an associated single port semaphore **19.** Port semaphores **19** are 1-bit read/write control flags settable to limit the number of software applications within the relevant partitions **15** that can simultaneously access the associated port buffers **18.**

In order to reduce latency resulting from interferences among different software applications due to shared resources contention, and, hence, application software execution slow-downs, the avionics system software is designed to implement, when executed, one or a combination of different performance boosters and aimed at boosting performance of the CPU **2** by exploiting different features related to the DDR architecture and memory bank segregation among the cores **4.**

In particular, the avionics system software is designed to implement, when executed, one or a combination of the following different performance boosters, which will be described here after in detail:
1. Memory Bank Segregation
2. Shared Memory Setup
3. Lock-free Communication Ports
4. DMA-Controlled I/O Accesses in Application Partition
5. Bandwidth Allocation/Limitation Control on Peripheral Without Built-in Performance Counters in the Chip.

### 1. Memory Bank Segregation , which is not covered by the subject matter of the claims.

This performance booster is aimed at preventing the DDR memory **7** from performing continuous row buffer reload due to any memory access by a software application on a core **4** between two memory accesses by a different software application on a different core **4.** As a matter of fact, there is always a sequence of mixed memory accesses from different cores **4** but the main interference slowdown is related to the row reload, forced when all the cores **4** perform a sequence of mixed access to the same memory bank **13.**

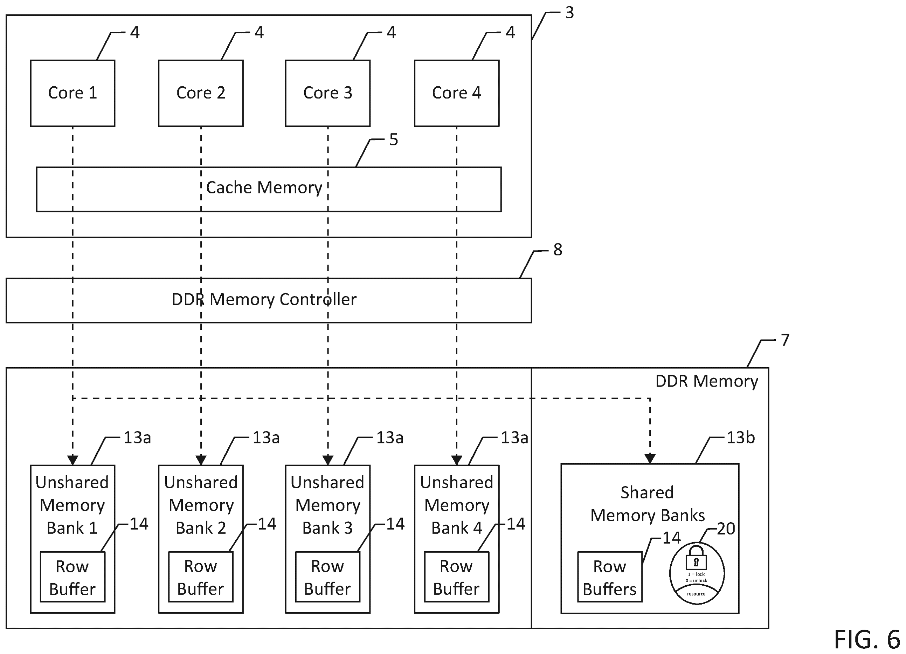

To prevent this situation from occurring, as shown in Figure 6, this performance booster provides for organizing the DDR memory **7** such that specific memory banks **13,** hereinafter referred to as exclusive or unshared memory banks and referenced as **13a,** are exclusively assigned to the cores **4** of the multicore processor **3** for the performance of their software application(s). The unshared memory banks **13a** are segregated or partitioned among the cores **4** of the multicore processor **3** such that each unshared memory bank **13a** is exclusively assigned to, and accessible by, one core **4** only, whereby each core **4** is assigned to, and can access, one or more unshared memory banks **13a** which are different from those assigned to, and accessible by, the other cores **4.**

Segregation of unshared memory banks **13a** among the cores **4,** along with the associated row buffers **14** thereof being differenced among the cores **4,** results in the DDR memory 7 responding immediately since data required by the different cores **4** is already loaded into the respective row buffers **14.** This solution prevents the case where fast access by a software application on a core 4 due to a row hit (successful row access) is disrupted by a row miss (unsuccessful row access) forced by a different software application executed on a different core **4** and consequently prevents heavy application slowdown.

### 2. Shared Memory Setup , which is not covered by the subject matter of the claims.

Even if different software applications hosted on different cores **4** are independent, there is frequently the need for sharing data among the software applications via the DDR memory **7,** which is to be properly organized in order not to penalize the performance enhancement that is achieved via the memory bank segregation described in the previous paragraph.

To accomplish this purpose, as shown in Figure 6, this performance booster provides for organizing the DDR memory **6** such that specific memory banks **13,** hereinafter referred to as shared memory banks and referenced as **13b,** are reserved for sharing data among the software applications and are distinct from the unshared memory banks **13a** exclusively assigned to the cores **4** for the performance of the software applications.

Row semaphores **20** are assigned to respective row buffers **14** of the shared memory banks **13b,** wherein a row semaphore **20** is a 1-bit read/write control flag selectively settable (to one of two different logic values) to cause the associated row buffer **14** to be writable by a data-producer software application that needs to store data in the row buffer **14** and to prevent it from being readable by data-consumer software applications during writing of the row buffer **14,** and, respectively, to be readable by one or different data-consumer software applications that need to read data from the row buffer **14.**

A row semaphore **20** may hence be set to cause the associated row buffer **14** to become "locked" to a data-producer software application so that the row buffer **14** is accessible by the data-producer software application only and is thus prevented from being accessible by the data-consumer software applications during writing of the row buffer **14.**

When writing of the row buffer **14** is completed, the row semaphore **20** may then be set to cause the associated row buffer **14** to be "released" from the data-producer software application, so that it becomes accessible to the data-consumer software applications that need to read data therefrom.

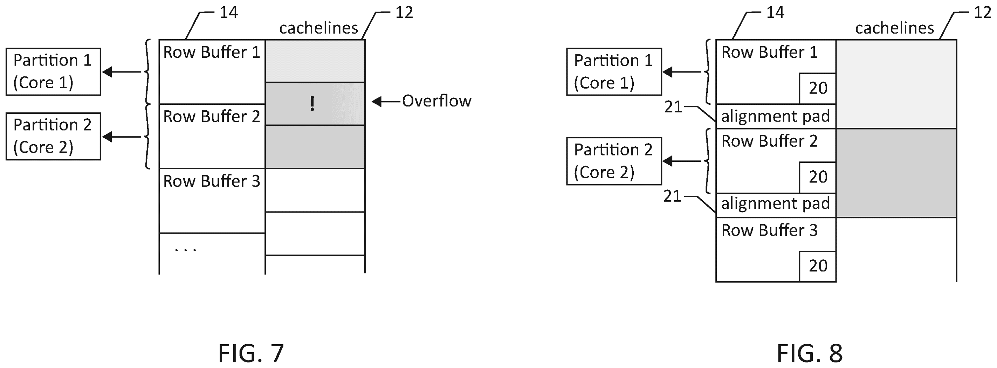

Moreover, in order to prevent a row buffer overflow situation shown in Figure 7 from occurring, where the size (length) of a row buffer **14** is different from that of a cache line **12** that is intended to be stored in the row buffer **14,** so resulting in a cache line **12** being part of two consecutive row buffers **14,** two different, alternative approaches may be adopted.

The first one, which may be adopted when the row buffers **14** can be sized as needed, provides for sizing each row buffer **14** to have a size equal to that of a whole number of cache lines **12,** namely in such a way that its size is an integer multiple of the size of a cache line **12.**

The second one, which is schematically depicted in Figure 8 and may be adopted when the row buffers **14** cannot be sized as needed, provides for associating each row buffer **14** with an alignment padding **21** that is appropriately sized so as to result in the overall size of the row buffer **14** with the associated alignment padding **16** being equal to the size of a whole number of cache lines **12.**

The same approach may be adopted for the row semaphores **20** associated to the row buffers **14,** which, although 1 bit or 1 byte long would be enough, are each so sized as to be equal to the size of a cache line **12.**

Exemplarily, a cache line **12** is typically 64-byte long on most architectures and is 8 to 16 times longer than a LongWord, which on 32-bit platforms and 64-bit Windows platforms is 32-bit (4 bytes) long, while in 64-bit iOS platforms is 64-bit (8 bytes) long.

Resultingly, a row buffer **14** is sized to be an integer multiple of 64 bytes, while the associated row semaphore **20** is sized to be 64-byte long.

### 3. Lock-free Communication Ports , which is not covered by the subject matter of the claims.

True deterministic behaviour of a software application is also influenced by the lock of ARINC 653 communication ports. In order to prevent this jitter into execution time, this performance booster provides for a lock-free mechanism using multiple port buffers **18** also for a sampling port **16.**

As previously described, a typical implementation for a sampling port **16** requires a single port buffer **18** and an associated single port semaphore **19.** While this implementation accomplishes the port functionality, it fails to guarantee a true deterministic behaviour of a software application because execution time of a software application depends on the time spent in waiting for the release of the port semaphore **19** which has been momentary locked by another core **4.**

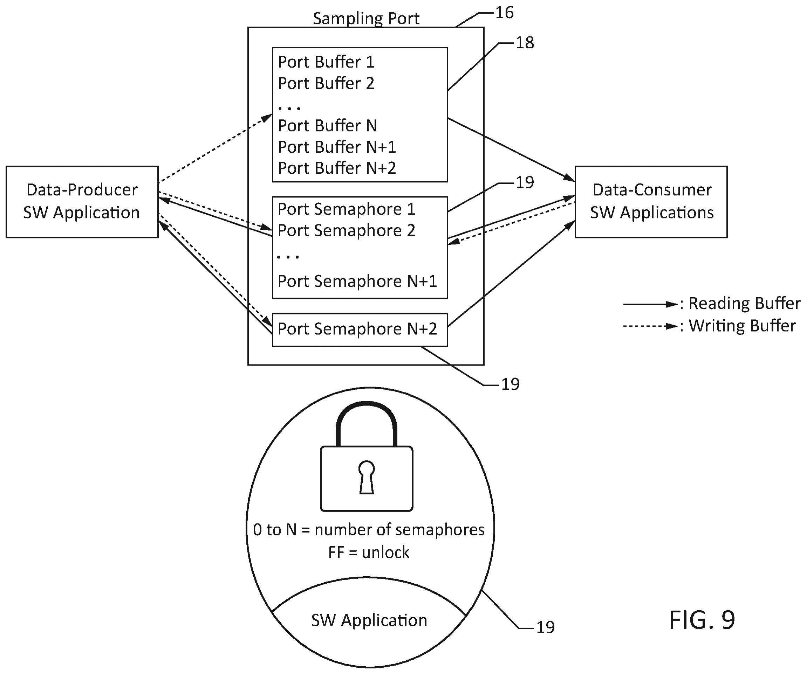

As shown in Figure 9, this performance booster provides for sampling ports **16** to be designed to comprise multiple port buffers **18** and multiple port semaphores **19.**

A sampling port **16** is further designed to be concurrently accessible by a single data-producer software application and by a maximum number N of data-consumer software applications, wherein a data-producer software application is a software application designed to access a sampling port **16** to write fresh data therein, and a data-consumer software application is a software application designed to access a sampling port **16** to read fresh data therefrom.

While only a single data-producer software application is allowed to access a sampling port **16** to write fresh data in a port buffer **18** thereof, the data-consumer software applications are allowed to simultaneously access the same port buffer **18** to read fresh data written therein by the data-producer software application.

The port semaphores **19** are provided in a number equal to the number of port buffers **18,** which are in turn provided in a number that is dependent upon the number of data-producer and data-consumer software applications that are allowed to concurrently access a sampling port **16,** and in particular that is equal to the sum of the number of data-producer software application, in the embodiment considered equal to one by design, and the number of data-consumer software applications that are allowed to access the sampling port **16,** in the embodiment considered equal to N by design.

According to this performance booster, this amount of port buffers **18** is further increased by one additional port buffer **18,** which is provided to guarantee that a data-producer software application that is needing to write fresh data in the sampling port **16** can always find a port buffer **18** available for that purpose, thus guaranteeing a deterministic execution of a data-producer software application.

Besides, differently from a typical implementation of a sampling port **16,** where an association is established at compile time between a port semaphore **19** and a port buffer **18,** this performance booster provides for an association to be established at compile time between port semaphores **19** and, instead of respective port buffers **18,** respective data-producer and the data-consumer software applications that are allowed to concurrently access a sampling port **16.**

The fact that the port semaphores **19** are provided in a number equal to the number of port buffers **18** and that a sampling port **16** is concurrently accessible by a single data-producer software application and a maximum number N of data-consumer software applications, this results in one port semaphore **19** being assigned to the data-producer software application to allow the port buffer **18** accessed by the data-producer software application to be identified, N port semaphores **19** being assigned to respective data-consumer software applications to allow the port buffers **18** accessed by the data-consumer software applications to be identified, and one additional port semaphore **19** is provided to allow the last-updated port buffer **18** to be identified, namely the port buffer **18** that was last written by the data-producer software application and, hence, that stores the freshest data.

This is shown in Figure 9, where N port semaphores **19** are assigned to the data-consumer software applications that are allowed to concurrently access the sampling port **16,** the N+1th port semaphore **19** is the one assigned to the data-producer software application, and the N+2th port semaphore **19** is the one provided to allow the last-updated port buffer **18** to be identified.

The association between the port semaphores **19** and data-producer and the data-consumer software applications requires that the port buffers **18** that are being accessed by the data-producer and data-consumer software applications be identifiable, and this functionality is ascribed to the port semaphores **19,** that are designed to identify the port buffers **18** that are being accessed by the data-producer and data-consumer software applications assigned to the port semaphores **19.**

To this purpose, the port semaphores **19** are designed to store the IDs of the port buffers **18** that are being accessed by the data-producer and data-consumer software applications assigned to the port semaphores **19.** Conveniently, the IDs of the port buffers **18** are the ordinal number of the port buffers **18** in the group of port buffers **18** in the sampling port **16.**

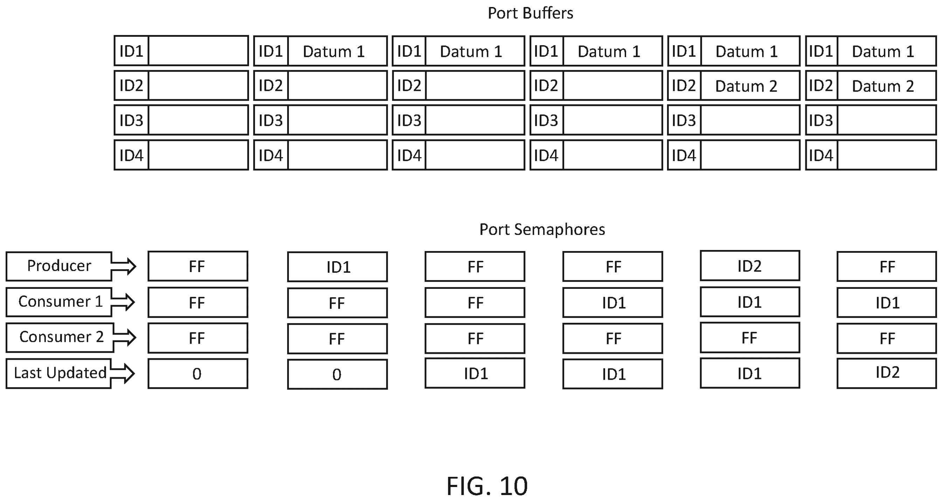

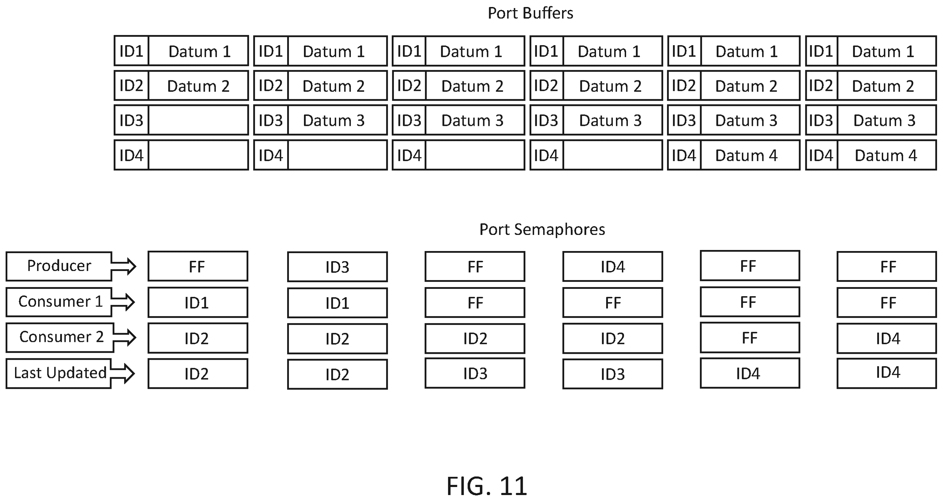

Figures 10 and 11 exemplarily schematically depict the way in which a data-producer software application and two data-consumer software applications concurrently access a sampling port **16** in reading and writing.

When a data-producer software application that is allowed to access a sampling port **16** needs to access the sampling port **16** to write fresh data therein, an available port buffer **18,** namely one that in that moment is not being read by any data-consumer software application, is identified and the ID of the identified port buffer **18** is written in the port semaphore **19** assigned at compile time to the data-producer software application during writing of the identified port buffer **18.**

This results in the identified port buffer **18** becoming "locked" to the data-producer software application during writing of the identified port buffer **18,** so resulting in the port buffer **18** being accessible by the data-producer software application only and prevented from being accessible by the data-consumer software applications during writing of the port buffer **18.** When writing of the port buffer **18** by the data-producer software application is completed, an ID which fails to identify any port buffer **18** in the sampling port **16** is written in the port semaphore **19** assigned to the data-producer software application.

This results in the identified port buffer **18** being "unlocked" or "released" from the data-producer software application, so resulting in the port buffer **18** becoming accessible to the data-consumer software applications that need to access the sampling port **16** to read fresh data written in the port buffer **18** by the data-producer software application.

Then, the ID of the port buffer **18** that has just been written is also written in the port semaphore **19** provided to identify the last-updated port buffer **18** just to identify the latter.

In the example depicted in Figure 10, the port buffer **18** that is identified to be available for writing by the data-producer software application is the one referenced by ID1. As may be appreciated, data is written in the port buffer **18** referenced by "ID1", and during writing of the port buffer **18** this is "locked" to the data-producer software application by writing the ID of the port buffer **18** in the port semaphore **19** assigned to the data-producer software application. When writing of the port buffer **18** is completed, this is "released" from the data-producer software application by writing in the port semaphore **19** assigned to the data-producer software application an ID which fails to identify any port buffer **18** in the sampling port **16,** "FF" in the example depicted in Figure 10.

If one or different data-consumer software applications need to access the sampling port **16** to read fresh data written by the data-producer software application, the ID of the last-updated port buffer **18** is read from the port semaphore **19** provided to identify the latter and then written in the semaphore(s) **19** assigned to the data-consumer software application(s) that need to access the sampling port **16** to read fresh data written by the data-producer software application in the last-updated port buffer **18.**

This results in the last-updated port buffer **18** becoming "locked" to the data-consumer software application(s), thus resulting in the last-updated port buffer **18** being accessible by the data-consumer software application(s) only to read fresh data therefrom and prevented from being accessible by the data-producer software application.

In the example depicted in Figure 10, the last-updated port buffer **18** referenced by ID1 is "locked" to the first data-consumer software application by first reading the ID of the last-updated port buffer **18** in the port semaphore **19** provided to identify the latter and then writing the ID of the last-updated port buffer **18** in the port semaphore **19** assigned to the first data-consumer software application the ID.

When reading of the port buffer **18** by the data-consumer software application(s) is completed, the port buffer **18** is "unlocked" or "released" from the data-consumer software application(s) in the same way as that described above with reference to the release of a port buffer **18** written by a data-producer software application, namely by writing in the port semaphore(s) **19** assigned to the data-consumer software application(s) an ID which fails to identify any port buffer **18** of the sampling port **16,** "FF" in the example considered, so resulting in the last-updated port buffer **18** becoming again accessible to both the data-producer software application that needs to access the sampling port **16** to write fresh data in the port buffer **18** and the other data-consumer software application(s) that need to access the sampling port **16** to read fresh data written in the last-updated port buffer **18** by the data-producer software application.

It goes without saying that during reading of the port buffer **18** by the data-consumer software application(s), the data stored in the port buffer **18** may no longer be the most recent data that had been stored at the beginning of reading because during reading of the port buffer **18** the data-producer software application may have written more recent data to another port buffer **18,** which in the meanwhile has thus become the last-updated port buffer **18.**

The above-described process in repeated whenever the data-producer software application needs to access the sampling port **16** to write fresh data in a port buffer **18** or one or different data-consumer software applications need to access the sampling port **16** to read fresh data from the last-updated port buffer **18.**

In the example depicted in Figures 10 and 11, fresh data has been written by the data-producer software application in the port buffers **18** referenced by ID2, ID3 and ID4, and, as depicted in Figure 11, fresh data has been read by the second data-consumer software application from the port buffers **18** referenced by ID2 and ID4, while fresh data written by the data-producer software application in the port buffer **18** referenced by ID3 has not been read by the data-consumer software applications.

This performance booster prevents by design data corruption due to concurrent read and write processes. Moreover, all cores **4** perform immediately their activities without waiting for the reset of a port semaphore **19.**

This performance booster may advantageously be further designed to prevent a port buffer overflow situation similar to that described above with reference to row buffers **14** and shown in Figure 7 from occurring, namely where the size of a port buffer **18** is different from that of a cache line **12** that is intended to be stored in the port buffer **18.**

For this purpose, the same technical features as those taken for the row buffers **14** may also be taken for the port buffers **18,** namely either sizing each port buffer **18** to have a size equal to the size of a whole number of cache lines **12,** namely in such a way that its size is an integer multiple of the size of a cache line **12,** or associating each port buffer **18** with an alignment padding **21** that is appropriately sized so as to result in the overall size of each port buffer **18** with the associated alignment padding **21** being equal to the size of a whole number of cache lines **12.**

Similarly, the same technical features as those taken for the row semaphores **20** may also be taken for the port semaphores **19,** namely appropriately sizing each port semaphore **19** so that it is so sized as to be equal to the size of a cache line **12.**

### 4. DMA-Controlled I/O Accesses in Application Partition

CPU **2** communicates with peripherals **10** through a variety of methods, depending on the specific hardware and system architecture. One common communication method is using I/O instructions in the instruction set of the CPU **2.** These instructions allow the CPU **2** to send signals to the peripherals **10,** such as requesting data transfer and sending control signals. Another communication method is through Direct Memory Access (DMA), where the peripherals **10** can access the DDR memory **7** directly without involving the CPU **2** for every data transfer. This can improve overall system performance by offloading data transfer tasks from the CPU **2.**

This performance booster provides for any I/O access to peripherals **10** required by software applications being caused to be managed by the DMA controller **11,** regardless of the unit of digital information that is needed to be written in or read from peripherals **10,** and, hence, also for a single byte (8 bits), a single Word (16 bit), or a single LongWord (32 or 64 bits), where typically it is more convenient to cause the CPU **2** to directly access the peripheral **10.** This prevents interference on the transaction buffers **6** used by the cores **4** to transfer data to and from the system bus **9.**

In fact, the number of transaction buffers **6** is limited into the CPU **2.** Keeping locked a transaction buffer **6,** waiting the answer from a peripheral **10** (placed for example on PCIe daisy-chain), reduces the overall performance of the multicore processor **3.** In particular, performance of the other cores **4** that access the DDR memory **7** only are reduced while a core **4** is waiting for data from a peripheral **10.** The I/O access is closed immediately and frees immediately the transaction buffer **6** used for this access. This prevents the slowdown of concurrent software applications hosted on other cores **4** due to a congestion on the transaction buffers **6.** The I/O access means that the core communication does not reach the peripheral **10** but is limited to the DMA and the transaction from the core **4** is closed immediately. Waiting for the answer from a peripheral **10** is delegated to the DMA. The performance is increased not because the core **4** that delegates the DMA is free but has to wait the data from the DMA peripheral **10,** but because the transaction buffer **6** became free immediately and this prevents the slowdown on the execution of the other cores **4** (that do not need the data from the peripheral) but that are influenced by the lock of the transaction buffers **6** from the cores **4** and the system bus **8.**

In certain CPU architectures, interferences among different software applications hosted on different cores **4** due to shared resources contention are managed by splitting performance of the operations required by a software application into two different time windows, a first one commonly referred to as Kernel Partition, where input data from HW input devices are (also mono-core) loaded to ARINC 653 input ports and output data written by software applications into ARINC 653 output ports are (also mono-core) sent to the HW output channels, and a second one commonly referred to as Application Partition, where software application hosted on the cores **4** are executed.

The benefit of this partition is that interferences among different software applications hosted on different cores **4** due to shared resources contention is limited to the DDR memory **7** only, thus avoiding interference on other I/O devices. This results in the software application slowdown being subjected to interferences on DDR memory **7** only and there are no interferences related to the concurrent access by different cores **4** to the same peripherals **10.**

This performance booster also provides for peripherals **10** being I/O accessible also in the Application Partition when the Kernel Partition cannot be awaited.

### 5. Bandwidth Allocation/Limitation Control on Peripherals Without Build-in Performance Counters in the Chip , which is not covered by the subject matter of the claims.

As is known, memory bandwidth allocation/limitation needs build-in performance counters. DMA-controlled I/O accesses to peripherals **10** do not provide performance counters in the chip and therefore cannot be used into a full deterministic solution based on memory bandwidth limitation.

This performance booster overcomes the absence of performance counters to count the number of DMA-controlled I/O accesses to the peripherals **10** by computing and allocating to each DMA-controlled I/O access to a peripheral **10** a worst-case execution time WCET which guarantees full deterministic DMA-controlled I/O accesses to the peripherals **10** by taking into account execution times of DMA-controlled I/O accesses to the peripherals **10** and the maximum number of concurrent DMA-controlled I/O to peripherals **10** the DMA controller **11** is designed to manage and which is typically equal to the number of cores **4** in the multicore processor **3.**

In particular, execution time of a DMA-controlled I/O access to a peripheral **10** is first characterised by:
- performing multiple DMA-controlled I/O accesses to peripherals **10** and computing execution times thereof, and
- computing a characterised execution time Wt of a DMA-controlled I/O access to a peripheral **10** based on the computed execution times of the multiple DMA-controlled I/O accesses to peripherals **10.**

Conveniently, multiple DMA-controlled I/O accesses to peripherals **10** are read accesses to peripherals **10** due to the fact that read accesses have to actually reach peripherals **10** while write accesses to peripherals **10** may be postponed by design, while the characterised execution time Wt of a DMA-controlled I/O access to a peripheral **10** may be computed as one, conveniently the worst one, of the execution times of the multiple DMA-controlled I/O accesses to peripherals **10.**

The worst-case execution time WCET allocated to each DMA-controlled I/O access to a peripheral **10** is then computed based on the maximum number N of concurrent DMA-controlled I/O accesses to peripherals **10** the DMA controller **11** is designed to manage and the characterised execution time Wt of a DMA-controlled I/O access to a peripheral **10,** conveniently based on the following formula: $WCET = Wt ⋅ N .$

This results in the WCET of a DMA-controlled I/O access to a peripheral **10** by single-core processor being equal to the WCET of a DMA-controlled I/O access to a peripheral **10** by a multi-core processor.

This allocation may be implemented both in the Kernel and in the Application Partitions, but in the Application Partition deploys its maximum benefit because it allows the jitter into the execution time to be minimized.

This solution reduces the latency derived by the interference and therefore the WCET. Full deterministic hard-real time software applications have to consider the absolute worst case (sum of worst case of single sections considering the max value of the jitter). This solution reduces the spread of the execution time (maximum value and not average value) made by the interference and in this produces an important reduction of the WCET shrinking the WCET jitter. A WCET reduction means the opportunity to reduce the associated time window and therefore increase the spare time for introducing other functions and applications.

The above-described performance boosters provide a performance upgrade into avionic (and deterministic) equipment reducing the interference into multicore systems. The solution is applicable to all real-time deterministic systems and is essential to upgrade the performance into the system where the deterministic behaviour is obtained with the bandwidth allocation solution.

## Claims

1. An avionics system **(1)** comprising electronic processing resources **(2)** including a multicore processor **(3)** with a plurality of cores **(4),** on each of which one or more software applications are stored and executed, and a cache memory **(5)** organised in cache lines **(12);** a system memory **(7)** organised in memory banks **(13);** a system bus **(9)** though which the multicore processor **(3)** accesses the system memory **(7)** and peripherals **(10);** and a Direct Memory Access (DMA) Controller **(11)** to manage I/O accesses to peripherals **(10);**
**characterized in that** the DMA Controller **(11)** is caused to manage any I/O access to peripherals **(10)** regardless of the unit of digital information that is needed to be written in or read from peripherals **(10),** and hence also for a single byte, a single Word, or a single LongWord.

2. The avionics system **(1)** of claim **1,** wherein the avionics system **(1)** is designed according to the Integrated Modular Architecture (IMA), wherein each module may host different software applications and is isolated from other modules by partitioning mechanisms including spatial and temporal partitioning performed according to the avionics application software standard interface ARINC 653, which is an aerospace standard that defines characteristics of data transference inside aerospace avionic devices and provides for a software specification for space and time partitioning in safety-critical avionics real-time operating systems (RTOS) which allows multiple software applications of different software levels to be hosted on the same hardware in the context of an IMA architecture;
wherein performance of operations required by a software application are split into two different partitions including a Kernel Partition, where input data from hardware input devices are loaded to ARINC 653 input ports and output data written by software applications into ARINC 653 output ports are sent to hardware output channels, and an Application Partition, where software application hosted on the cores **4** are executed; and
wherein peripherals **(10)** are caused to be I/O accessible also in the Application Partition when the Kernel Partition cannot be awaited.

3. The avionics system **(1)** of claim **1** or **2,** wherein the DMA controller **(11)** is further designed to manage a maximum number of concurrent DMA-controlled I/O accesses to peripherals **(10);**
a worst-case execution time (WCET) is allocated to each DMA-controlled I/O access to a peripheral **(10)** and computed based on the maximum number of concurrent DMA-controlled I/O accesses to peripherals **(10)** the DMA controller **(11)** is designed to manage and on a characterised execution time (Wt) of a DMA-controlled I/O access to a peripheral **(10).**

4. The avionics system **(1)** of claim **3,** wherein the worst-case execution time (WCET) allocated to each DMA-controlled I/O access to a peripheral **(10)** is equal to the maximum number of concurrent DMA-controlled I/O accesses to peripherals **(10)** the DMA controller **(11)** is designed to manage, multiplied by the characterised execution time (Wt) of a DMA-controlled I/O access to a peripheral **(10).**

5. The avionics system **(1)** of claim **3** or **4,** wherein the characterised execution time (Wt) of a DMA-controlled I/O access to a peripheral **(10)** is computed based on execution times of multiple DMA-controlled I/O accesses to peripherals **(10).**

6. The avionics system **(1)** of claim **5,** wherein the characterised execution time (Wt) of a DMA-controlled I/O access to a peripheral **(10)** is one, conveniently the worst one, of the execution times of the multiple DMA-controlled I/O accesses to peripherals **(10).**

7. The avionics system **(1)** of any one of the preceding claims **3** to **6,** wherein the maximum number of concurrent DMA-controlled I/O accesses to peripherals **(10)** is equal to the number of cores **(4)** in the multicore processor **(3).**

8. The avionics system **(1)** of any one of the preceding claims **1** to **7,** wherein the memory banks **(13)** comprise unshared memory banks **(13a)** assigned to the cores **(4)** of the multicore processor **(3)** for the performance of the respective software application(s);
the unshared memory banks **(13a)** are partitioned among the cores **(4)** of the multicore processor **(3)** such that each unshared memory bank **(13a)** is exclusively assigned to, and accessible by, one core **(4)** only, whereby each core **(4)** is assigned to, and can access, one or more unshared memory banks **(13a)** which are different from those assigned to, and accessible by, the other cores **(4).**

9. The avionics system **(1)** of claim **8,** wherein each unshared memory bank **(13a)** comprises a row buffer **(14)** acting as a cache within the unshared memory bank **(13a).**

10. The avionics system **(1)** of any one of the preceding claims, wherein the memory banks **(13)** further comprise shared memory banks **(13b)** shared among the cores **(4)** of the multicore processor **(3)** for sharing data among the software applications executed by the cores **(4);**
each shared memory bank **(13b)** comprises a row buffer **(14)** acting as a cache within the shared memory bank **(13b)** and an associated row semaphore **(20)** selectively settable to cause the associated row buffer **(14)** to be writable by a data-producer software application that needs to write data in the row buffer **(14)** and to prevent it from being readable by data-consumer software applications during writing of the row buffer **(14),** and, respectively, to be readable by a single or different data-consumer software applications that need to read data from the row buffer **(14).**

11. The avionics system **(1)** of claim **10,** wherein each row buffer **(14)** is so sized as to be equal to the size of a whole number of cache lines **(12).**

12. The avionics system **(1)** of claim **10,** wherein each row buffer **(14)** is associated with an alignment padding **(21)** so sized as to result in the overall size of the row buffer **(14)** and of the associated alignment padding **(21)** being equal to the size of a whole number of cache lines **(12).**

13. The avionics system **(1)** of any one of the preceding claims **10** to **12,** wherein each row semaphore **(20)** is so sized as to be equal to the size of a cache line **(12).**

14. The avionics system **(1)** of any one of the preceding claims, wherein the avionics system **(1)** is designed according to the Integrated Modular Architecture (IMA), wherein each module may host different software applications and is isolated from other modules by partitioning mechanisms including spatial and temporal partitioning;
communications between partitions are handled through communications ports **(16)** and channels **(17),** wherein communications ports **(16)** are gates at the boundaries of partitions and communications channels **(17)** mutually connect communications ports **(16);**
communications ports **(16)** comprise sampling ports **(16),** which are communications ports **(16)** operating in sampling mode, and queuing ports **(16),** which are communications ports **(16)** operating in queuing mode;
a sampling port **(16)** is designed to be concurrently accessible by data-producer and data-consumer software applications, wherein a data-producer software application is a software application designed to access a sampling port **(16)** to write fresh data therein, and a data-consumer software application is a software application designed to access a sampling port **(16)** to read fresh data therefrom;
a sampling port **(16)** is further designed to comprise multiple port buffers **(18)** and multiple port semaphores **(19);**
port semaphores **(19)** are provided in a number equal to the number of port buffers **(18);**
port buffers **(18)** are provided in a number dependent upon the number of data-producer and data-consumer software applications that are allowed to concurrently access a sampling port **(16);** and
port semaphores **(19)** are assigned to respective data-producer and the data-consumer software applications that are allowed to concurrently access a sampling port **(16)** and are designed to identify port buffers **(18)** accessed by the data-producer and data-consumer software applications assigned to the port semaphores **(19).**

15. The avionics system **(1)** of claim **14,** wherein port buffers **(18)** are provided in a number that is equal to the number of data-producer and data-consumer software applications that are allowed to concurrently access a sampling port **16,** increased by one additional port buffer **(18)** so as to result in one of the port buffers **(18)** in the sampling port **(16)** being always available for being accessible by a data-producer software application.

## Patentansprüche

1. Avioniksystem (**1**), umfassend elektronische Verarbeitungsressourcen (**2**), darunter einen Multikern-Prozessor (**3**) mit einer Vielzahl von Kernen (**4**), auf denen jeweils eine oder mehrere Softwareanwendungen gespeichert und ausgeführt werden, und einen Cache-Speicher (**5**), der in Cache-Zeilen (**12**) organisiert ist; einen Systemspeicher (**7**), der in Speicherbänken (**13**) organisiert ist; einen Systembus (**9**), über den der Multikern-Prozessor (**3**) auf den Systemspeicher (**7**) und auf Peripheriegeräte (**10**) zugreift; und einen Direct Memory Access (DMA)-Controller (**11**) zur Verwaltung der E/A-Zugriffe auf Peripheriegeräte (**10**);
**dadurch gekennzeichnet, dass** der DMA-Controller (**11**) veranlasst wird, jeden E/A-Zugriff auf Peripheriegeräte (**10**) zu verwalten, unabhängig von der Einheit digitaler Informationen, die in Peripheriegeräte (**10**) geschrieben oder aus diesen gelesen werden müssen, und somit auch für ein einzelnes Byte, ein einzelnes Wort oder ein einzelnes Langwort.

2. Avioniksystem (**1**) nach Anspruch **1,** wobei das Avioniksystem (**1**) gemäß der integrierten modularen Architektur (IMA) ausgebildet ist, wobei jedes Modul verschiedene Softwareanwendungen hosten kann und durch Partitionierungsmechanismen, einschließlich räumlicher und zeitlicher Partitionierung, von anderen Modulen getrennt ist, die gemäß dem Standard-Interface ARINC 653 der Avionikanwendungssoftware ausgeführt werden, bei dem es sich um einen Luft- und Raumfahrtstandard handelt, der Merkmale der Datenübertragung innerhalb von Luft- und Raumfahrt-Avionikvorrichtungen definiert und eine Softwarespezifikation für die Raum- und Zeitpartitionierung in sicherheitskritischen Echtzeit-Betriebssystemen (RTOS) der Avionik bereitstellt, die es ermöglicht, mehrere Softwareanwendungen unterschiedlicher Softwareebenen auf derselben Hardware im Rahmen einer IMA-Architektur zu hosten;
wobei die Ausführung von Vorgängen, die von einer Softwareanwendung erfordert werden, in zwei verschiedene Partitionen aufgeteilt sind, darunter eine Kernel-Partition, in der Eingabedaten aus Hardware-Eingabevorrichtungen in ARINC 653-Eingabeports geladen werden und Ausgabedaten, die von Softwareanwendungen in ARINC 653-Ausgabeports geschrieben werden, an Hardware-Ausgabekanäle gesendet werden, und eine Anwendungspartition, in der Softwareanwendungen, die auf den Kernen **4** gehostet werden, ausgeführt werden; und wobei Peripheriegeräte (**10**) auch in der Anwendungspartition E/A-zugänglich sind, wenn die Kernelpartition nicht abgewartet werden kann.

3. Avioniksystem (**1**) nach Anspruch **1** oder **2,** wobei der DMA-Controller (**11**) ferner dazu ausgebildet ist, eine maximale Anzahl gleichzeitiger, OMA-gesteuerter E/A-Zugriffe auf Peripheriegeräte (**10**) zu verwalten;
jedem OMA-gesteuerten E/A-Zugriff auf ein Peripheriegerät (**10**) wird eine Ausführungszeit im schlimmsten Fall (WCET) zugeteilt, die basierend auf der maximalen Anzahl gleichzeitiger OMA-gesteuerter E/A-Zugriffe auf Peripheriegeräte (**10**), für deren Verwaltung der DMA-Controller (**11**) ausgebildet ist, und auf einer charakterisierten Ausführungszeit (Wt) eines OMA-gesteuerten E/A-Zugriffs auf ein Peripheriegerät (**10**) berechnet wird.

4. Avioniksystem (**1**) nach Anspruch **3**, wobei die jedem OMA-gesteuerten E/A-Zugriff auf ein Peripheriegerät (**10**) zugeteilte Ausführungszeit im schlimmsten Fall (WCET) gleich der maximalen Anzahl gleichzeitiger OMA-gesteuerter E/A-Zugriffe auf Peripheriegeräte (**10**) ist, für deren Verwaltung der OMA-Controller (**11**) ausgebildet ist, multipliziert mit der charakterisierten Ausführungszeit (Wt) eines OMA-gesteuerten E/A-Zugriffs auf ein Peripheriegerät (**10**).

5. Avioniksystem (**1**) nach Anspruch **3** oder **4**, wobei die charakterisierte Ausführungszeit (Wt) eines OMA-gesteuerten E/A-Zugriffs auf ein Peripheriegerät (**10**) basierend auf Ausführungszeiten mehrerer OMA-gesteuerter E/A-Zugriffe auf Peripheriegeräte (**10**) berechnet wird.

6. Avioniksystem (**1**) nach Anspruch **5**, wobei die charakterisierte Ausführungszeit (Wt) eines OMA-gesteuerten E/A-Zugriffs auf ein Peripheriegerät (**10**) eine, zweckmäßigerweise die schlimmste, unter den Ausführungszeiten der mehreren OMA-gesteuerten E/A-Zugriffe auf Peripheriegeräte (**10**) ist.

7. Avioniksystem (**1**) nach einem der vorhergehenden Ansprüche **3** bis **6**, wobei die maximale Anzahl gleichzeitiger OMA-gesteuerter E/A-Zugriffe auf Peripheriegeräte (**10**) gleich der Anzahl der Kerne (**4**) im Multikern-Prozessor (**3**) ist.

8. Avioniksystem (**1**) nach einem der vorhergehenden Ansprüche **1** bis **7,** wobei die Speicherbänke (**13**) nicht gemeinsam genutzte Speicherbänke (**13a**) umfassen, die den Kernen (**4**) des Multikern-Prozessors (**3**) für die Ausführung der jeweiligen Softwareanwendung(en) zugewiesen sind; die nicht gemeinsam genutzten Speicherbänke (**13a**) sind unter den Kernen (**4**) des Multikern-Prozessors (**3**) so aufgeteilt, dass jede nicht gemeinsam genutzte Speicherbank (**13a**) ausschließlich nur einem Kern (**4**) zugewiesen ist und von diesem zugänglich ist, wodurch jeder Kern (**4**) einer oder mehreren nicht gemeinsam genutzten Speicherbänken (**13a**) zugewiesen ist und auf diese zugreifen kann, die sich von denjenigen unterscheiden, die den anderen Kernen (**4**) zugewiesen sind und von diesen zugänglich sind.

9. Avioniksystem (**1**) nach Anspruch **8**, wobei jede nicht gemeinsam genutzte Speicherbank (**13a**) einen Reihenpuffer (**14**) umfasst, der als Cache innerhalb der nicht gemeinsam genutzten Speicherbank (**13a**) fungiert.

10. Avioniksystem (**1**) nach einem der vorhergehenden Ansprüche, wobei die Speicherbänke (**13**) ferner gemeinsam genutzte Speicherbänke (**13b**) umfassen, die unter den Kernen (**4**) des Multikern-Prozessors (**3**) gemeinsam genutzt werden, um Daten unter den von den Kernen (**4**) ausgeführten Softwareanwendungen gemeinsam zu nutzen;
jede gemeinsam genutzte Speicherbank (**13b**) umfasst einen Reihenpuffer (**14**), der als Cache innerhalb der gemeinsam genutzten Speicherbank (**13b**) fungiert, und einen zugeordneten Reihen-Semaphor (**20**), der selektiv so eingestellt werden kann, dass der zugeordnete Reihenpuffer (**14**) von einer Datenproduzenten-Softwareanwendung, die Daten in den Reihenpuffer (**14**) schreiben muss, beschrieben werden kann und verhindert wird, dass er während des Schreibens des Reihenpuffers (**14**) von Datenkonsumenten-Softwareanwendungen gelesen werden kann, und jeweils von einer einzelnen oder von verschiedenen Datenkonsumenten-Softwareanwendungen, die Daten aus dem Reihenpuffer (**14**) lesen müssen, gelesen werden kann.

11. Avioniksystem (**1**) nach Anspruch **10**, wobei jeder Reihenpuffer (**14**) so bemessen ist, dass er gleich der Größe einer ganzen Anzahl von Cache-Zeilen (**12**) ist.

12. Avioniksystem (**1**) nach Anspruch **10**, wobei jedem Reihenpuffer (**14**) eine Ausrichtungsauffüllung (**21**) zugeordnet ist, die so bemessen ist, dass die Gesamtgröße des Reihenpuffers (**14**) und der zugeordneten Ausrichtungsauffüllung (**21**) gleich der Größe einer ganzen Anzahl von Cache-Zeilen (**12**) ist.

13. Avioniksystem (**1**) nach einem der vorhergehenden Ansprüche **10** bis **12**, wobei jeder Reihen-Semaphor (**20**) so bemessen ist, dass er gleich der Größe einer Cache-Zeile (**12**) ist.

14. Avioniksystem (**1**) nach einem der vorhergehenden Ansprüche, wobei das Avioniksystem (**1**) gemäß der integrierten modularen Architektur (IMA) ausgebildet ist, wobei jedes Modul verschiedene Softwareanwendungen hosten kann und durch Partitionierungsmechanismen, einschließlich räumlicher und zeitlicher Partitionierung, von anderen Modulen getrennt ist;
Kommunikationen zwischen den Partitionen erfolgen über Kommunikationsports (**16**) und -kanäle (**17**), wobei die Kommunikationsports (**16**) Gates an den Grenzen der Partitionen sind und die Kommunikationskanäle (**17**) die Kommunikationsports (**16**) miteinander verbinden;
Kommunikationsports (**16**) umfassen Sampling-Ports (**16**), bei denen es sich um Kommunikationsports (**16**) handelt, die im Sampling-Modus arbeiten, und Warteschlangen-Ports (**16**), bei denen es sich um Kommunikationsports (**16**) handelt, die im Warteschlangen-Modus arbeiten;
ein Sampling-Port (**16**) ist so ausgebildet, dass er gleichzeitig von Datenproduzenten- und Datenkonsumenten-Softwareanwendungen zugänglich ist, wobei eine Datenproduzenten-Softwareanwendung eine Softwareanwendung ist, die so ausgebildet ist, dass sie auf einen Sampling-Port (**16**) zugreift, um aktuelle Daten in ihn zu schreiben, und eine Datenkonsumenten-Softwareanwendung eine Softwareanwendung ist, die so ausgebildet ist, dass sie auf einen Sampling-Port (**16**) zugreift, um aktuelle Daten aus ihm auszulesen;
ein Sampling-Port (**16**) ist ferner so ausgebildet, dass er mehrere Port-Puffer (**18**) und mehrere Port-Semaphoren (**19**) umfasst;
Port-Semaphoren (**19**) sind in einer Anzahl vorgesehen, die gleich der Anzahl von Port-Puffern (**18**) ist;
Port-Puffer (**18**) sind in einer Anzahl vorgesehen, die von der Anzahl von Datenproduzenten- und Datenkonsumenten-Softwareanwendungen abhängt, denen der gleichzeitige Zugriff auf einen Sampling-Port (**16**) gestattet ist; und
Port-Semaphoren (**19**) sind den jeweiligen Datenproduzenten- und Datenkonsumenten-Softwareanwendungen zugewiesen, denen der gleichzeitige Zugriff auf einen Sampling-Port (**16**) gestattet ist und dazu ausgebildet sind, Port-Puffer (**18**) zu identifizieren, auf die die den Port-Semaphoren (**19**) zugewiesenen Datenproduzenten- und Datenkonsumenten-Softwareanwendungen zugreifen.

15. Avioniksystem (**1**) nach Anspruch **14**, wobei Port-Puffer (**18**) in einer Anzahl vorgesehen sind, die gleich der Anzahl von Datenproduzenten- und Datenkonsumenten-Softwareanwendungen ist, denen der gleichzeitige Zugriff auf einen Sampling-Port **16** gestattet ist, erhöht um einen zusätzlichen Port-Puffer (**18**), sodass einer der Port-Puffer (**18**) im Sampling-Port (**16**) immer für den Zugriff durch eine Datenproduzenten-Softwareanwendung verfügbar ist.

## Revendications

1. Système avionique (**1**) comprenant des ressources de traitement électronique (**2**)**,** incluant un processeur multicœur (**3**) ayant une pluralité de cœurs (**4**), sur chacun desquels une ou plusieurs applications logicielles sont stockées et exécutées, et une mémoire cache (**5**) organisée en lignes de cache (**12**) ; une mémoire système (**7**) organisée en banques de mémoire (**13**) ; un bus système (**9**) par lequel le processeur multicœur (**3**) accède à la mémoire système (**7**) et aux périphériques (**10**) ; et un contrôleur d'accès direct à la mémoire (DMA) (**11**) destiné à gérer les accès d'E/S aux périphériques (**10**) ;
**caractérisé en ce que** le contrôleur DMA (**11**) est amené à gérer tout accès d'E/S aux périphériques (**10**), quelle que soit l'unité d'information numérique devant être écrite dans les périphériques (**10**) ou lue à partir de ceux-ci, et ainsi également pour un seul octet, un seul mot ou un seul mot long.

2. Système avionique (**1**) selon la revendication **1**, dans lequel le système avionique (**1**) est conçu selon l'architecture modulaire intégrée (IMA), dans laquelle chaque module peut héberger différentes applications logicielles et est isolé des autres modules par des mécanismes de partitionnement, notamment un partitionnement spatial et temporel effectué conformément à l'interface standard des logiciels d'application avioniques ARINC 653, qui est une norme aérospatiale définissant les caractéristiques du transfert de données au sein des dispositifs avioniques aérospatiaux et fournissant une spécification logicielle pour le partitionnement spatial et temporel dans les systèmes d'exploitation temps réel (RTOS) pour applications avioniques critiques pour la sécurité, ce qui permet à plusieurs applications logicielles de niveaux logiciels différents d'être hébergées sur le même matériel dans le cadre d'une architecture IMA ;
dans lequel l'exécution des opérations requises par une application logicielle est répartie entre deux partitions distinctes, à savoir une partition noyau, dans lequel les données d'entrée provenant des périphériques d'entrée matériels sont chargées vers les ports d'entrée ARINC 653 et les données de sortie écrites par les applications logicielles vers les ports de sortie ARINC 653 sont transmises aux canaux de sortie matériels, et une partition application, dans laquelle les applications logicielles hébergées sur les cœurs **4** sont exécutées ; et dans laquelle des périphériques (**10**) sont amenés à être accessibles en E/S également dans la partition application lorsque la partition noyau ne peut pas être mise en attente.

3. Système avionique (**1**) selon la revendication **1** ou **2,** dans lequel le contrôleur DMA (**11**) est en outre conçu pour gérer un nombre maximal d'accès d'E/S simultanés, contrôlés par l'OMA, vers des périphériques (**10**) ;
un temps d'exécution dans le pire des cas (WCET) est attribué à chaque accès d'E/S contrôlé par OMA à un périphérique (**10**) et calculé sur la base du nombre maximal d'accès d'E/S simultanés contrôlés par OMA aux périphériques (**10**), le contrôleur OMA (**11**) est conçu pour gérer et sur la base d'un temps d'exécution caractérisé (Wt) d'un accès d'E/S contrôlé par OMA à un périphérique (**10**).

4. Système avionique (**1**) selon la revendication **3**, dans lequel le temps d'exécution dans le pire des cas (WCET) attribué à chaque accès d'E/S contrôlé par OMA à un périphérique (**10**) est égal au nombre maximal d'accès d'E/S simultanés contrôlés par OMA aux périphériques (**10**), le contrôleur OMA (**11**) est conçu pour gérer, multiplié par le temps d'exécution caractérisé (Wt) d'un accès d'E/S contrôlé par OMA à un périphérique (**10**).

5. Système avionique (**1**) selon la revendication **3** ou **4**, dans lequel le temps d'exécution caractérisé (Wt) d'un accès d'E/S contrôlé par OMA à un périphérique (**10**) est calculé sur la base des temps d'exécution de plusieurs accès d'E/S contrôlés par OMA à des périphériques (**10**).

6. Système avionique (**1**) selon la revendication **5**, dans lequel le temps d'exécution caractérisé (Wt) d'un accès d'E/S contrôlé par OMA à un périphérique (**10**) est l'un, de préférence le plus défavorable, des temps d'exécution des multiples accès d'E/S contrôlés par OMA aux périphériques (**10**).

7. Système avionique (**1**) selon l'une quelconque des revendications précédentes **3** à **6**, dans lequel le nombre maximal d'accès d'E/S simultanés, contrôlés par OMA, aux périphériques (**10**) est égal au nombre de cœurs (**4**) du processeur multicœur (**3**).

8. Système avionique (**1**) selon l'une quelconque des revendications précédentes **1** à **7,** dans lequel les banques de mémoire (**13**) comprennent des banques de mémoire non partagées (**13a**) attribuées aux cœurs (**4**) du processeur multicœur (**3**) pour l'exécution de la ou des applications logicielles respectives ; les banques de mémoire non partagées (**13a**) sont réparties entre les cœurs (**4**) du processeur multicœur (**3**) de telle sorte que chaque banque de mémoire non partagée (**13a**) soit exclusivement attribuée à, et accessible par, un seul cœur (**4**) uniquement, chaque cœur (**4**) se voyant ainsi attribuer, et pouvant accéder à, une ou plusieurs banques de mémoire non partagées (**13a**) qui sont différentes de celles attribuées aux autres cœurs (**4**) et accessibles par ceux-ci.

9. Système avionique (**1**) selon la revendication **8**, dans lequel chaque banque de mémoire non partagée (**13a**) comprend un tampon de ligne (**14**) faisant office de cache au sein de la banque de mémoire non partagée (**13a**).

10. Système avionique (**1**) selon l'une quelconque des revendications précédentes, dans lequel les banques de mémoire (**13**) comprennent en outre des banques de mémoire partagées (**13b**) partagées entre les cœurs (**4**) du processeur multicœur (**3**) afin de permettre le partage des données entre les applications logicielles exécutées par les cœurs (**4**) ;
chaque banque de mémoire partagée (**13b**) comprend un tampon de ligne (**14**) faisant office de cache au sein de la banque de mémoire partagée (**13b**) et un sémaphore de ligne associé (**20**) pouvant être activé de manière sélective pour permettre au tampon de ligne associé (**14**) d'être accessible en écriture par une application logicielle productrice de données qui a besoin d'écrire des données dans le tampon de ligne (**14**) et pour empêcher qu'il ne soit accessible en lecture par des applications logicielles consommatrices de données pendant l'écriture dans le tampon de ligne (**14**), et, respectivement, pour qu'il soit accessible en lecture par une ou plusieurs applications logicielles consommatrices de données différentes qui ont besoin de lire des données à partir du tampon de ligne (**14**).

11. Système avionique (**1**) selon la revendication **10**, dans lequel chaque tampon de ligne (**14**) est dimensionné de manière à correspondre à la taille d'un nombre entier de lignes de cache (**12**).

12. Système avionique (**1**) selon la revendication **10**, dans lequel chaque tampon de ligne (**14**) est associé à un remplissage d'alignement (**21**) dont la taille est telle que la taille totale du tampon de ligne (**14**) et du remplissage d'alignement associé (**21**) soit égale à la taille d'un nombre entier de lignes de cache (**12**).

13. Système avionique (**1**) selon l'une quelconque des revendications précédentes **10** à **12**, dans lequel chaque sémaphore de ligne (**20**) est dimensionné de manière à être égal à la taille d'une ligne de cache (**12**).

14. Système avionique (**1**) selon l'une quelconque des revendications précédentes, dans lequel le système avionique (**1**) est conçu selon l'architecture modulaire intégrée (IMA), dans laquelle chaque module peut héberger différentes applications logicielles et est isolé des autres modules par des mécanismes de partitionnement, notamment un partitionnement spatial et temporel ;
des communications entre des partitions sont gérées par l'intermédiaire de ports de communication (**16**) et de canaux (**17**), des ports de communication (**16**) étant des passerelles situées aux limites des partitions et des canaux de communication (**17**) reliant entre eux des ports de communication (**16**) ;
des ports de communication (**16**) comprennent des ports d'échantillonnage (**16**), qui sont des ports de communication (**16**) fonctionnant en mode d'échantillonnage, et des ports de mise en file d'attente (**16**), qui sont des ports de communication (**16**) fonctionnant en mode de mise en file d'attente ;
un port d'échantillonnage (**16**) est conçu pour être accessible simultanément par des applications logicielles productrices de données et consommatrices de données, une application logicielle productrice de données étant une application logicielle conçue pour accéder à un port d'échantillonnage (**16**) afin d'y écrire de nouvelles données, et une application logicielle consommatrice de données étant une application logicielle conçue pour accéder à un port d'échantillonnage (**16**) afin d'y lire des nouvelles données ;
un port d'échantillonnage (**16**) est en outre conçu pour comprendre plusieurs tampons de port (**18**) et plusieurs sémaphores de port (**19**) ;
des sémaphores de port (**19**) sont présents en nombre égal à celui des tampons de port (**18**) ;
des tampons de port (**18**) sont présents en un nombre dépendant du nombre d'applications logicielles productrices de données et consommatrices de données autorisées à accéder simultanément à un port d'échantillonnage (**16**) ; et
des sémaphores de port (**19**) sont attribués respectivement aux applications logicielles productrices de données et consommatrices de données autorisées à accéder simultanément à un port d'échantillonnage (**16**) et sont conçus pour identifier des tampons de port (**18**) auxquels accèdent les applications logicielles productrices de données et consommatrices de données attribuées aux sémaphores de port (**19**).

15. Système avionique (**1**) selon la revendication **14**, dans lequel des tampons de port (**18**) sont présents en un nombre égal au nombre d'applications logicielles productrices et consommatrices de données autorisées à accéder simultanément à un port d'échantillonnage **16**, augmenté d'un tampon de port supplémentaire (**18**), de manière à ce que l'un des tampons de port (**18**) du port d'échantillonnage (**16**) soit toujours disponible pour être accessible par une application logicielle productrice de données.
